# EUROPEAN PATENT SPECIFICATION

(11) **EP 2 696 388 B1**
(45) Date of publication and mention of the grant of the patent: **08.10.2014**
(21) Application number: 12175793.4
(22) Date of filing: 08.08.2012
(51) Int. Cl.: H01M 2/10, H01M 2/02

(54) **Battery assembly device**
Batterieanordnungsvorrichtung
Dispositif d'assemblage de batterie

(43) Date of publication of application: 12.02.2014
(73) Proprietor: Lite-On Technology Corporation, Taipei City 11492 (TW)
(72) Inventor: Lu, Cheng-Ji, 11492 Taipei City (TW); Tsai, Wen-Chun, 11492 Taipei City (TW); Ou, Hsun-wen, Taipei City (TW)
(74) Representative: Altenburg, Bernardus Stephanus Franciscus

(56) References cited:
- WO-A1-2007/075019
- DE-A1-102007 063 269
- US-A1- 2002 015 880
- US-A1- 2010 136 407
- US-A1- 2011 008 667

## Description

### BACKGROUND OF THE INVENTION

### Field of the Invention

The present invention relates to a battery assembly device; more particularly, the present invention relates to a battery assembly device capable of preventing battery units from freely slipping.

### Description of the Related Art

Nowadays, a battery holder set is always designed as a battery base with a fixed structure for accommodating a plurality of battery units. However, because the structure of the battery holder set is fixed, the quantity for accommodating the battery units is fixed as well. If there's a need of increasing the quantity of the battery units, the structure of the battery holder set has to be re-designed. Further, in known prior arts, the battery unit directly and tightly touches another battery unit so as to prevent the battery unit from slipping. However, because the battery unit would generate heat when it provides an electric current, it is difficult to dissipate the heat generated by the battery unit, and thus the battery unit would easily generate a high temperature which causes internal electrolyte or electrode material to gasify. As a result, the battery unit would possibly result in thermal expansion, and would be damaged due to extrusion caused by tight contact with other battery units. Moreover, different battery units in direct contact may conduct with each other for mutual potential differences; however this may lower the power supply capability.

Therefore, there is a need to provide a battery assembly device to mitigate and/or obviate the aforementioned problems.

A battery assembly device according to the preamble is known from US2010/0136407. It discloses battery units with a rubber cap. The battery units are bonded to a battery frame using adhesive for use in a vibration-intensive environment.

### SUMMARY OF THE INVENTION

It is an object of the present invention to provide a battery assembly device capable of preventing battery units from freely slipping.

To achieve the abovementioned objects, the battery assembly device of the present invention comprises a first frame and a plurality of battery units according to claim 1. The first frame has an inner surface. The plurality of battery units are disposed in the first frame, wherein any one battery unit has at least one anti-slip film, and the any one battery unit is used for touching another anti-slip film of another battery unit via the anti-slip film, or touching the inner surface of the first frame via the anti-slip film.

Other objects, advantages, and novel features of the invention will become more apparent from the following detailed description when taken in conjunction with the accompanying drawings. All claims are included in the description by reference.

### BRIEF DESCRIPTION OF THE DRAWINGS

These and other objects and advantages of the present invention will become apparent from the following description of the accompanying drawings, which disclose several embodiments of the present invention. It is to be understood that the drawings are to be used for purposes of illustration only, and not as a definition of the invention.

In the drawings, wherein similar reference numerals denote similar elements throughout the several views:
FIG. 1 illustrates an exploded drawing of a battery assembly device according to a first embodiment of the present invention.
FIG. 2 illustrates a perspective view of the battery assembly device according to the first embodiment of the present invention.
FIG. 3 illustrates an exploded drawing of the battery assembly device according to a second embodiment of the present invention.
FIG. 4 illustrates a perspective view of the battery assembly device according to the second embodiment of the present invention.
FIG. 5 illustrates an exploded drawing of the battery assembly device according to a third embodiment of the present invention.
FIG. 6 illustrates a perspective view of the battery assembly device according to the third embodiment of the present invention.
FIG. 7 illustrates a schematic drawing showing the assembly of a first frame and a second frame according to the present invention.
FIG. 8 illustrates a schematic drawing showing the appearance of the battery assembly device according to a fourth embodiment of the present invention.
FIG. 9 illustrates an exploded drawing of the battery assembly device according to the fourth embodiment of the present invention.

### DETAILED DESCRIPTION OF THE PREFERRED EMBODIMENTS

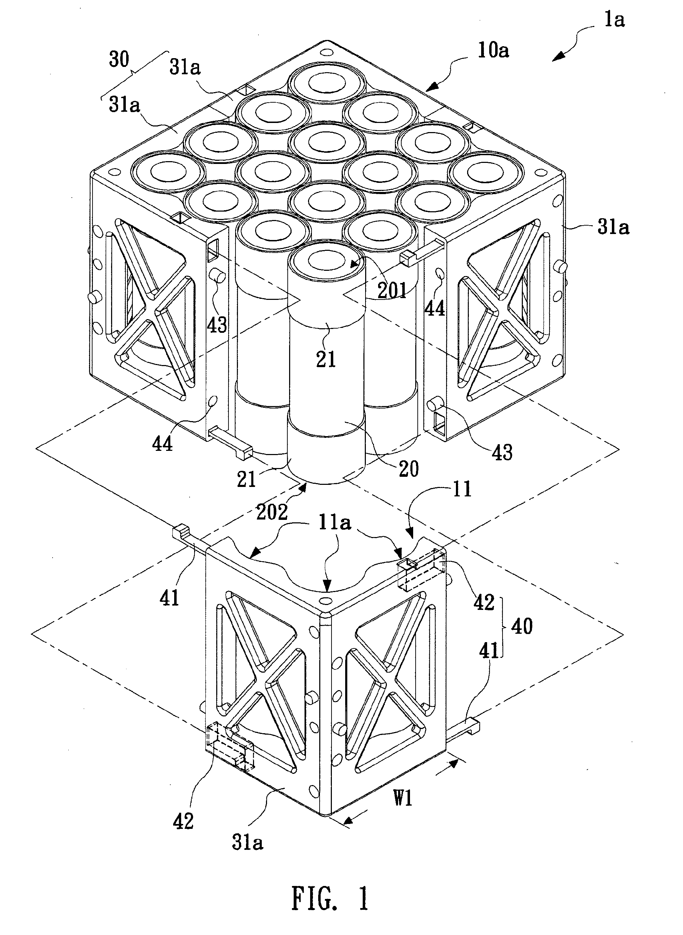

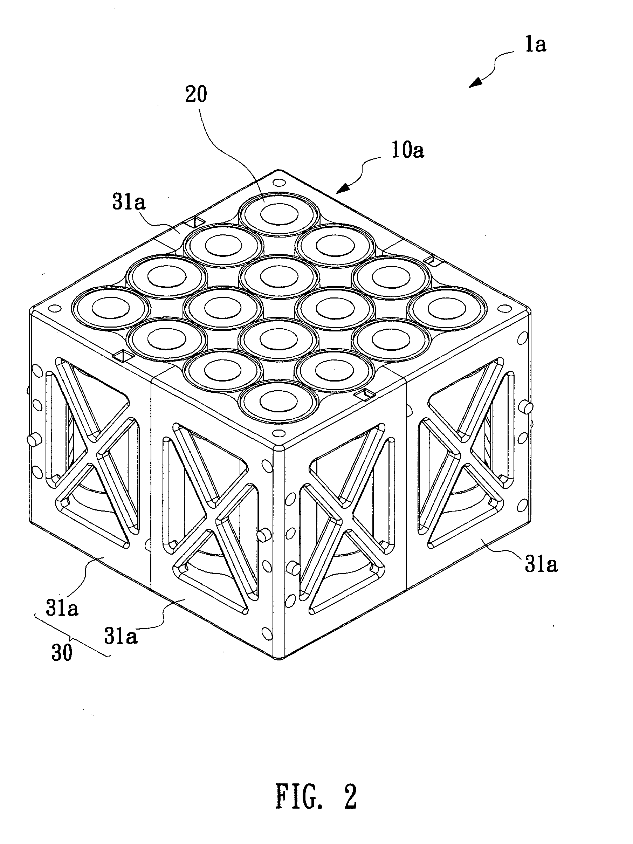

Please refer to FIGs. 1∼2 related to schematic drawings of a battery assembly device according to a first embodiment of the present invention, wherein FIG. 1 illustrates an exploded drawing of the battery assembly device according to the first embodiment of the present invention; and FIG. 2 illustrates a perspective view of the battery assembly device according to the first embodiment of the present invention.

In the first embodiment of the present invention, the battery assembly device 1a comprises a first frame 10a and a plurality of battery units 20. The plurality of battery units 20 are disposed in the first frame 10a. The appearance of the battery unit 20 can be in a cylinder shape; however, the present invention does not limit the appearance or shape of the battery unit 20. The battery unit 20 comprises a top electrode 201, a bottom electrode 202 and at least one anti-slip film 21. The top electrode 201 and the bottom electrode 202 can be exposed to the first frame 10a, so as to transmit power to external loads (not shown in figures) via electric connection. The anti-slip film 21 can be a plastic tape, or can be made of other materials with a higher friction coefficient, and is used to be attached onto the surface of the battery unit 20. As a result, the battery unit 20 can touch another anti-slip film 21 of another battery unit 20 via the anti-slip film 21, and thus prevent the battery unit 20 from slipping. Meanwhile, if the battery unit 20 is located adjacent to an inner surface 11 of the first frame 10a, the battery unit 20 can also touch the inner surface 11 of the first frame 10a via the anti-slip film 21, so as to increase friction to prevent the battery unit 20 from departing from the first frame 10a.

Please note that the battery unit 20 can have two anti-slip films 21 respectively disposed adjacent to the top electrode 201 and the bottom electrode 202. However, the battery unit 20 can also have only one anti-slip film 21 disposed adjacent to either the top electrode 201 or the bottom electrode 202 without limiting the scope of the present invention. In addition to preventing the battery unit 20 from slipping, the anti-slip film 21 can also prevent the battery unit 20 from expanding due to the gasification of the internal electrolyte or the electrode material caused by temperature rise of the battery unit 20. The structural expansion of the battery unit 20 may also cause the battery unit 20 to explode. On the other hand, the anti-slip film 21 can also achieve insulation effect, so as to prevent different battery units 20 from generating potential difference and thereby conducting with each other.

The inner surface 11 of the first frame 10a has a plurality of curve portions 11a used for associating with the size of the battery unit 20, such that the battery unit 20 can be placed in the corresponding curve portion 11a. As a result, the battery unit 20 can combine with the first frame 10a via the anti-slip film 21 and the corresponding curve portion 11a, such that the battery unit 20 would not be easily slipped from the first frame 10a. The present invention does not limit the first frame 10a to have only a single standard; the first frame 10a can comprise a plurality of assembly frames 30, wherein each assembly frame 30 can be flexibly engaged with each other via an engaging structure 40.

As shown in FIG. 1, the engaging structure 40 can be a engaging hook 41 and a engaging notch 42, and can be disposed on a surface where the assembly frame 30 touches with another assembly frame 30, such that the engaging hook 41 of a certain assembly frame 30 corresponds to the engaging notch 42 of another assembly frame 30, and the engaging notch 42 of the certain assembly frame 30 corresponds to the engaging hook 41 of the another assembly frame 30. Therefore, the assembly frame 30 can utilize its engaging hook 41 and engaging notch 42 to be engaged and fixed with the corresponding engaging hook 41 and engaging notch 42 of another assembly frame 30. Please note that the engaging structure 40 shown in FIG. 1 is just for illustration purpose, the present invention does not limit the structure for engaging and fixing different assembly frames 30. Besides, in order to strengthen the structure stability while assembling the assembly frames 30, the surface where each assembly frame 30 touches with another assembly frame 30 can further comprise mutually corresponding positioning post 43 and positioning notch 44. As a result, while assembling different assembly frames 30, the positioning posts 43 and the positioning notches 44 on different assembly frames 30 can mutually associate with each other so as to improve the strength for combination. However, please note that the present invention is not required to comprise the positioning post 43 and the positioning notch 44.

In the first embodiment of the present invention, the assembly frames 30 comprise four L-shaped first corner frames 31a, wherein the width W1 of the first corner frame 31a is substantially equal to two diameter lengths of the battery unit 20, such that a single surface of the first frame 10a can place four battery units 20. Therefore, as shown in FIG. 1, the first frame 10a formed by four first corner frames 31a can accommodate sixteen battery units 20 in total.

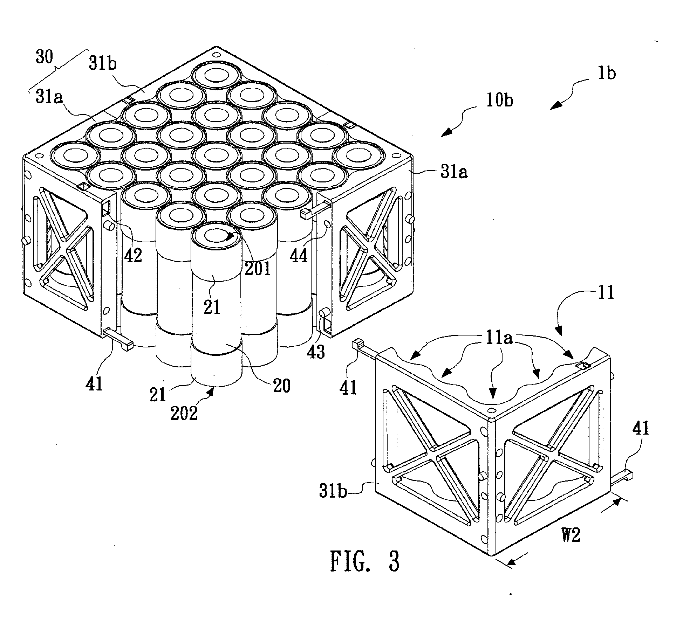

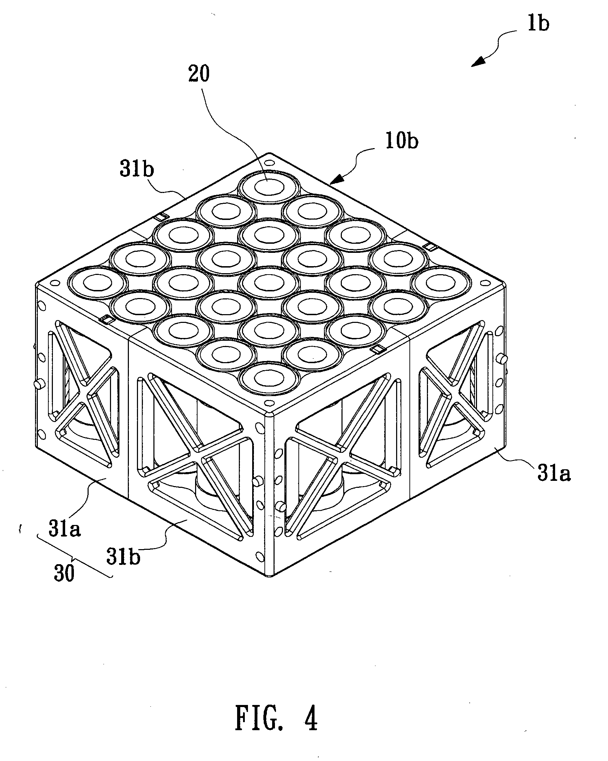

Then, please refer to FIGs. 3∼4 related to schematic drawings of the battery assembly device according to a second embodiment of the present invention, wherein FIG. 3 illustrates an exploded drawing of the battery assembly device according to the second embodiment of the present invention; and FIG. 4 illustrates a perspective view of the battery assembly device according to the second embodiment of the present invention.

The present invention does not limit the quantity of the battery units 20. In the second embodiment of the present invention, the quantity of the battery units 20 accommodated in the first frame 10b of the battery assembly device 1b is different from the quantity accommodated in the first embodiment. As shown in FIG. 4, the assembly frames 30 used for forming the first frame 10b comprise two first corner frames 31a and two second corner frames 31b. The surface where the first corner frame 31a touches the second corner frame 31b also comprises mutually corresponding engaging hook 41, engaging notch 42, positioning post 43 and positioning notch 44, so as to be engaged with each other. The width W2 of the second corner frame 31b is substantially equal to three diameter lengths of the battery unit 20, such that a single surface of the first frame 10b can place five battery units 20. Therefore, the first frame 10b can accommodate twenty five battery units 20 in total.

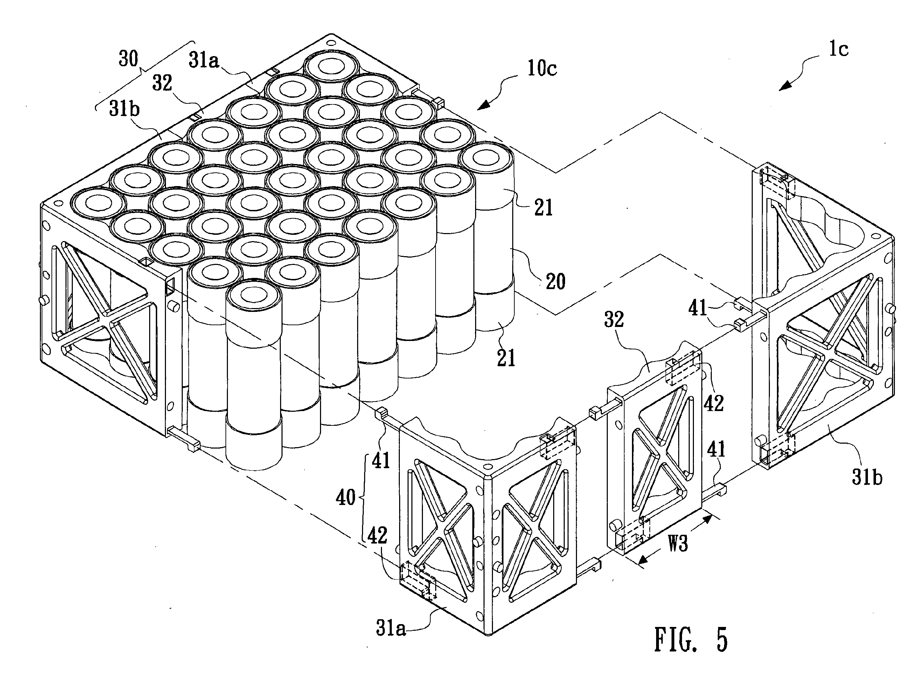

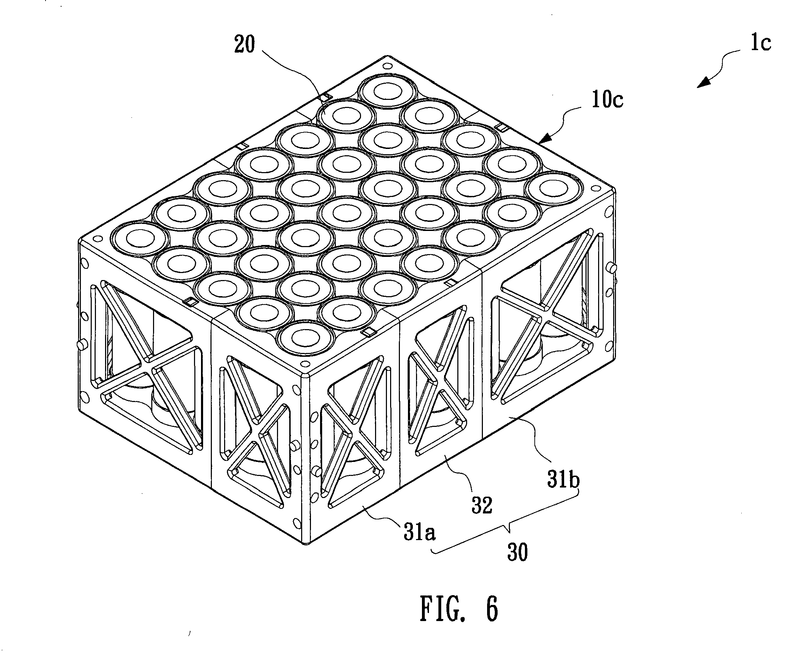

Next, please refer to Figs. 5∼6 related to schematic drawings of the battery assembly device according to a third embodiment of the present invention, wherein FIG. 5 illustrates an exploded drawing of the battery assembly device according to the third embodiment of the present invention; and FIG. 6 illustrates a perspective view of the battery assembly device according to the third embodiment of the present invention.

In the third embodiment of the present invention, the first frame 10c of the battery assembly device 1c can further comprise two side frames 32. The width W3 of the side frame 32 is substantially equal to two diameter lengths of the battery unit 20. The side frame 32 is disposed between the first corner frame 31a and the second corner frame 31b, and is mutually engaged and fixed via the engaging structure 40 of the same structure, as illustrated in FIG. 5. Therefore, one surface of the first frame 10c can place seven battery units 20, and the other surface of the first frame 10c can place five battery units 20, and thus the first frame 10c can accommodate thirty five battery units 20 in total.

As a result, according to freestyle combinations of the abovementioned first corner frames 31a, second corner frames 31b and side frames 32, the battery assembly device 1a, 1b or 1c can accommodate different quantities of battery units 20 according to different needs.

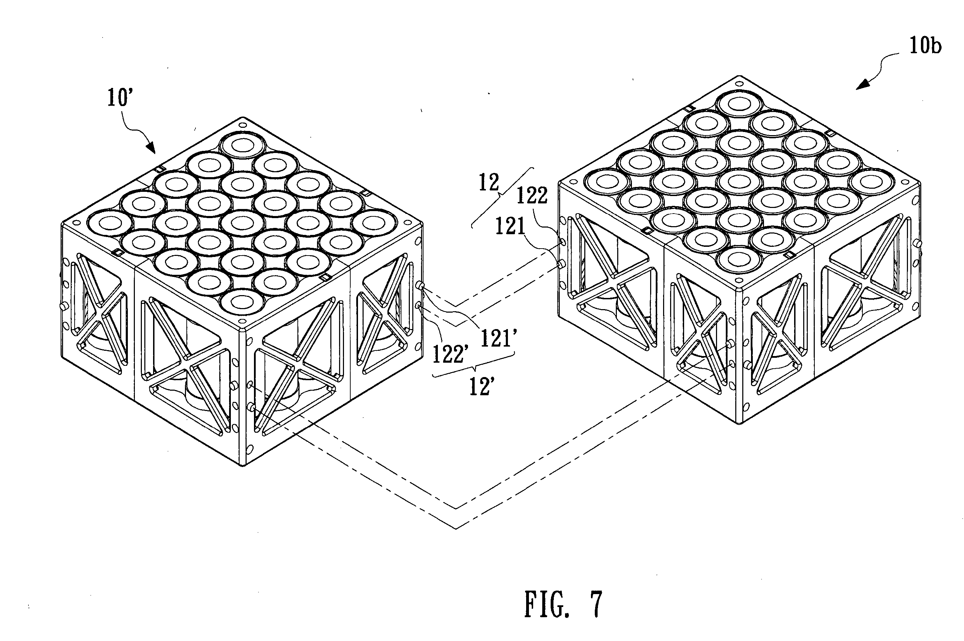

By utilizing different assembly frames 30 to adjust the quantity of the battery units 20, the frames can also combine with each other to increase the quantity of the battery units 20. Then, please refer to FIG. 7, which illustrates a schematic drawing showing the assembly of the first frame and a second frame according to the present invention.

The frames of the present invention can also be engaged with each other for assembly, as shown in FIG. 7. The first frame 10b can be engaged with the second frame 10'. The first frame 10b and the second frame 10' can be frames of the same size or different sizes. The outside of the first frame 10b has a first interlocking structure 12, the outside of the second frame 10' has a corresponding second interlocking structure 12', wherein the first interlocking structure 12 can comprise a positioning post 121 and a positioning notch 122, and the second interlocking structure 12' comprises mutually corresponding positioning post 121' and positioning notch 122'. By means of inserting the positioning post 121 into its corresponding positioning notch 122' and inserting the positioning post 121' into its corresponding positioning notch 122, the first frame 10b can be connected with the second frame 10'.

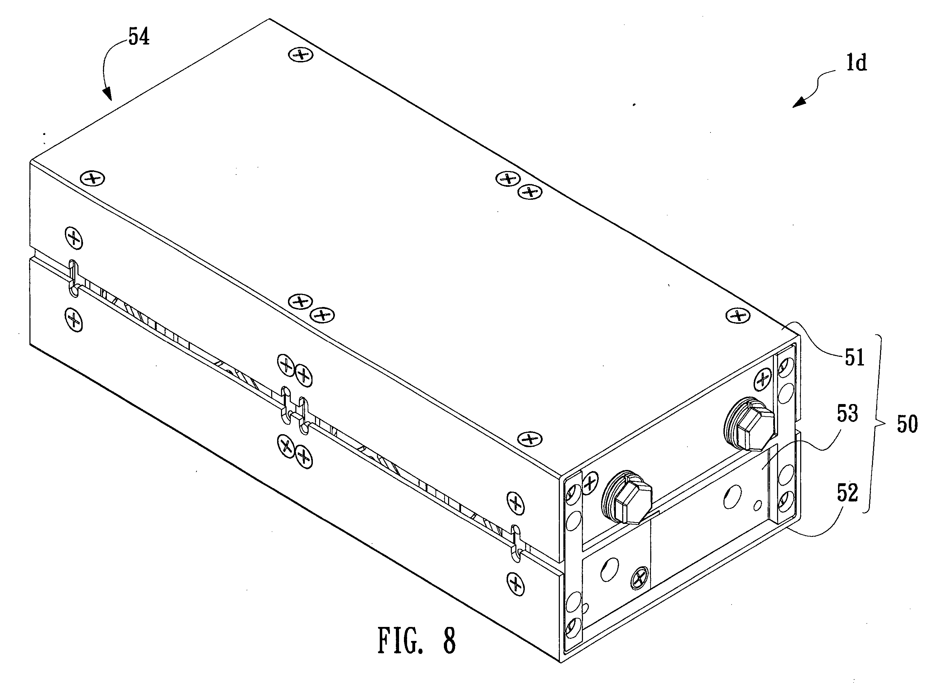

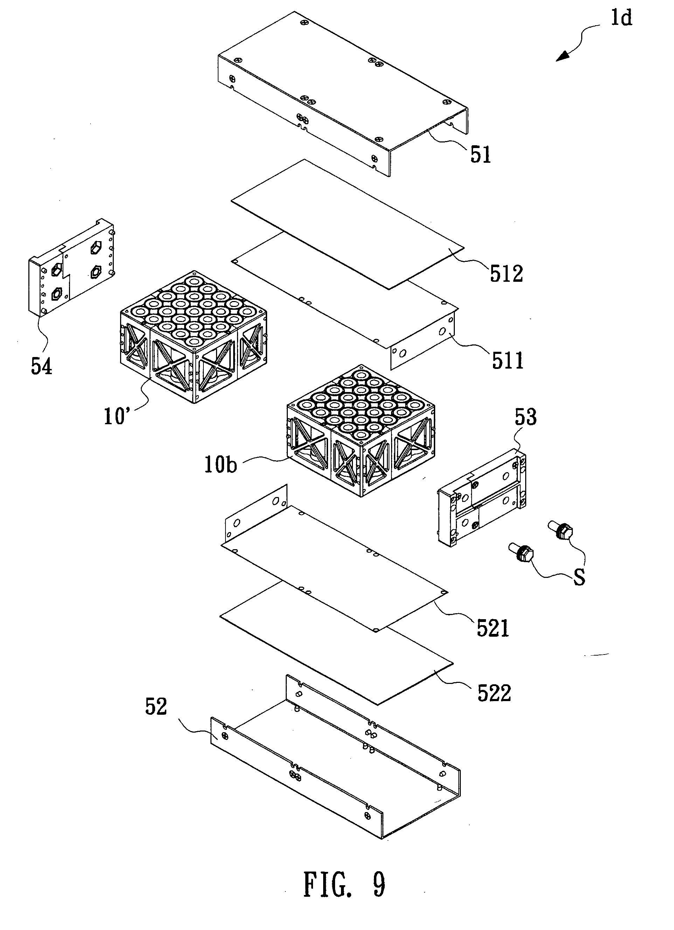

Then, please refer to FIGs. 8∼9 related to schematic drawings of the battery assembly device according to a fourth embodiment of the present invention, wherein FIG. 8 illustrates a schematic drawing showing the appearance of the battery assembly device according to the fourth embodiment of the present invention; and FIG. 9 illustrates an exploded drawing of the battery assembly device according to the fourth embodiment of the present invention.

In the fourth embodiment of the present invention, the battery assembly device 1d further comprises a casing 50 used for covering the first frame 10b and the second frame 10b'. However, the present invention does not limit the quantity or size of the frames that the casing 50 can cover. The casing 50 comprises a first cover 51, a second cover 52, a front cover 53 and a back cover 54. Each of the abovementioned covers can be fixed with the first frame 10b and the second frame 10' by locking, so as to protect the first frame 10b and the second frame 10'.

A first electrode plate 511 and a first thermal pad 512 are disposed under the first cover 51. The first electrode plate 511 can be a metal sheet in an L-shaped structure, and can be made of such as copper or nickel without limiting the scope of the present invention. One surface of the first electrode plate 511 touches the plurality of top electrodes 201 of the plurality of battery units 20; the other surface of the first electrode plate 511 is locked to the front cover 53 via screws S and is exposed outwardly, so as to connect to external loads (not shown in figures). The first thermal pad 512 is made of an insulation material, and is positioned between the first cover 51 and the first electrode plate 511, such that the heat generated by the battery unit 20 can be transmitted to the first cover 51 for dissipation in a faster way.

Likewise, a similar second electrode plate 521 and a second thermal pad 522 are disposed above the second cover 52. One surface of the second electrode plate 521 touches the plurality of bottom electrodes 202 of the plurality of battery units 20; the other surface of the second electrode plate 521 is locked to the back cover 54 and is exposed outwardly, so as to connect to the external loads. The second thermal pad 522 is also made of an insulation material, and is positioned between the second cover 52 and the second electrode plate 521, such that the heat can be transmitted to the second cover 52 for dissipation in a faster way. Finally, as shown in FIG. 8, the first frame 10b and the second frame 10' are both covered in the casing 50.

According to the description of the abovementioned battery assembly devices 1a to 1d, the battery assembly devices 1a to 1d can reduce the damage due to the heat generated by the battery unit 20, and can adjust the quantity of required battery units 20 in a more flexible way.

## Claims

1. A battery assembly device, comprising:
a first frame, having an inner surface; and
a plurality of battery units, disposed in the first frame,
wherein any one battery unit has at least one anti-slip film, the any one battery unit is used for touching another anti-slip film of another battery unit via the anti-slip film, or touching the inner surface of the first frame via the anti-slip film,
**characterized, in that** the any one battery unit has a top electrode and a bottom electrode, and the any one battery unit has two anti-slip films respectively disposed adjacent to the top electrode and the bottom electrode.

2. The battery assembly device according to claim 1, wherein the inner surface of the first frame has a plurality of curve portions used for associating with sizes of the plurality of battery units, such that each of the battery units touching the first frame is placed in a corresponding curve portion.

3. The battery assembly device according to claim 1, wherein the first frame has a plurality of assembly frames, and each of the assembly frames comprises an engaging structure used for mutual engagement.

4. The battery assembly device according to claim 3, wherein the plurality of assembly frames has a plurality of corner frames.

5. The battery assembly device according to claim 4, wherein the width of each of the corner frames is substantially equal to two or three diameter lengths of the battery unit.

6. The battery assembly device according to claim 4 or 5, wherein the plurality of assembly frames further have a plurality of side frames.

7. The battery assembly device according to claim 6, wherein the width of each of the side frames is substantially equal to two diameter lengths of the battery unit.

8. The battery assembly device according to any of the preceding claims, further comprising a casing for disposing the first frame.

9. The battery assembly device according to any of the preceding claims, wherein the first frame has a first interlocking structure, the battery assembly device further has a second frame, and the second frame has a second interlocking structure, such that the first frame mutually combines with the second interlocking structure of the second frame via the first interlocking structure.

## Patentansprüche

1. Batterieanordnungsvorrichtung, umfassend:
einen ersten Rahmen, der eine innere Oberfläche aufweist; und
eine Vielzahl von Batterieeinheiten, die in dem ersten Rahmen angeordnet sind,
wobei jede der Batterieeinheiten wenigstens einen Anti-Rutsch-Film aufweist, jede der Batterieeinheiten dazu verwendet wird einen anderen Anti-Rutsch-Film einer anderen Batterieeinheit über den Anti-Rutsch-Film zu berühren oder die innere Oberfläche des ersten Rahmens über den Anti-Rutsch-Film zu berühren,
**dadurch gekennzeichnet, dass** jede der Batterieeinheiten eine obere Elektrode und eine untere Elektrode umfasst und dass jede der Batterieeinheiten zwei Anti-Rutsch-Filme jeweils nahe der oberen Elektrode und nahe der unteren Elektrode angeordnet, aufweist.

2. Batterieanordnungsvorrichtung nach Anspruch 1, wobei die innere Oberfläche des ersten Rahmens eine Vielzahl von gebogenen Bereichen aufweist, die dafür verwendet werden, sich mit den Umfängen der Vielzahl von Batterieeinheiten zu verbinden, so dass jede der Batterieeinheiten, die den ersten Rahmen berühren, in einem entsprechenden gebogenen Bereich platziert wird.

3. Batterieanordnungsvorrichtung nach Anspruch 1, wobei der erste Rahmen eine Vielzahl von Einbaurahmen aufweist, wobei jeder der Einbaurahmen eine Kontaktstruktur umfasst, die für den gemeinsamen Kontakt benutzt werden.

4. Batterieanordnungsvorrichtung nach Anspruch 3, wobei die Vielzahl von Einbaurahmen eine Vielzahl von Eckrahmen umfasst.

5. Batterieanordnungsvorrichtung nach Anspruch 4, wobei die Breite jedes der Eckrahmen im Wesentlichen identisch zu der Länge des zweifachen oder dreifachen Durchmessers der Batterieeinheit ist.

6. Batterieanordnungsvorrichtung nach einem der Ansprüche 4 oder 5, wobei die Vielzahl von Einbaurahmen weiterhin eine Vielzahl von Seitenrahmen aufweist.

7. Batterieanordnungsvorrichtung nach Anspruch 6, wobei die Breite jedes der Seitenrahmen in Wesentlichen identisch zu der Länge des zweifachen Durchmessers der Batterieeinheit ist.

8. Batterieanordnungsvorrichtung nach einem der vorhergehenden Ansprüche, weiterhin umfassend ein Gehäuse, um den ersten Rahmen aufzunehmen.

9. Batterieanordnungsvorrichtung nach einem der vorhergehenden Ansprüche, wobei der erste Rahmen eine erste Verriegelungseinrichtung aufweist, die Batterieeinheit weiterhin einen zweiten Rahmen umfasst und der zweite Rahmen eine zweite Verriegelungseinrichtung aufweist, so dass der erste Rahmen sich zusammen mit der zweiten Verriegelungseinrichtung des zweiten Rahmens über die erste Verriegelungseinrichtung verbindet.

## Revendications

1. Un dispositif d'assemblage de batteries, comprenant :
un premier cadre, comportant une surface interne ; et
une pluralité d'unités de batterie, disposée dans le premier cadre, chaque unité de batterie comportant au moins un film anti-glissement, chaque batterie est utilisée pour toucher un autre film anti-glissement d'une autre unité de batterie par l'intermédiaire du film anti-glissement, ou pour toucher la surface interne du premier cadre par l'intermédiaire du film anti-glissement,
**caractérisé en ce que** chaque unité de batterie comporte une électrode supérieure et une électrode inférieure, et **en ce que** chaque unité de batterie comporte deux films anti-glissement respectivement disposés de façon adjacente à l'électrode supérieure et à l'électrode inférieure.

2. Le dispositif d'assemblage de batteries selon la revendication 1, dans lequel la surface interne du premier cadre a une pluralité de portions courbes utilisée en correspondance des tailles de la pluralité d'unités de batterie, de telle sorte que chacune des unités de batterie touchant le premier cadre est placée dans une portion courbe correspondante.

3. Le dispositif d'assemblage de batteries selon la revendication 1, dans lequel le premier cadre comprend une pluralité de structures d'assemblage, et chacune des structures d'assemblage comporte une structure d'engagement, utilisée pour un engagement mutuel.

4. Le dispositif d'assemblage de batteries selon la revendication 3, dans lequel la pluralité de structures d'assemblage comprend une pluralité de structures d'angle.

5. Le dispositif d'assemblage de batteries selon la revendication 4, dans lequel la largeur de chacune des structures d'angle est sensiblement égale à deux ou trois valeurs de diamètres de l'unité de batterie.

6. Le dispositif d'assemblage de batteries selon la revendication 4 ou la revendication 5, dans lequel la pluralité de structures d'assemblage possède en outre une pluralité de structures latérales.

7. Le dispositif d'assemblage de batteries selon la revendication 6, dans lequel la largeur de chacune des structures latérales est sensiblement égale à deux valeurs de diamètres de l'unité de batterie.

8. Le dispositif d'assemblage de batteries selon l'une quelconque des revendications précédentes, comprenant en outre un boîtier pour loger le premier cadre.

9. Le dispositif d'assemblage de batteries selon l'une quelconque des revendications précédentes, dans lequel le premier cadre comporte une première structure d'emboîtement, le dispositif d'assemblage de batteries comporte en outre un deuxième cadre, et le deuxième cadre comporte une deuxième structure d'emboîtement, de telle sorte que le premier cadre se combine mutuellement avec la deuxième structure d'emboîtement du deuxième cadre par l'intermédiaire de la première structure d'emboîtement.
